# FASCICULE DE BREVET EUROPEEN

(11) **EP 3 173 744 B1**
(45) Date de publication et mention de la délivrance du brevet: **17.07.2019**
(21) Numéro de dépôt: 16200080.6
(22) Date de dépôt: 22.11.2016
(51) Int. Cl.: G01C 22/00, G01P 3/486

(54) **ODOMÈTRE OPTIQUE AMÉLIORÉ**
VERBESSERTER OPTISCHER WEGSTRECKENZÄHLER
IMPROVED OPTICAL ODOMETER

(30) Priorité: 26.11.2015 FR 1561422
(43) Date de publication de la demande: 31.05.2017
(73) Titulaire: ALSTOM Transport Technologies, 93400 Saint-Ouen (FR)
(72) Inventeur: BOCENO, Lucas, 69005 Lyon (FR); CASTELLE, Jerome, 69720 Saint Bonnet de Mure (FR)
(74) Mandataire: Lavoix

(56) Documents cités:
- DE-A1- 3 104 500
- DE-A1-102012 214 481
- US-A- 3 886 354
- US-A- 4 031 441
- US-A- 5 665 965

## Description

L'invention a pour domaine celui des odomètres optiques du type présentant une forme globalement symétrique par rotation autour d'un axe, comportant un demi-arbre mobile en rotation autour dudit axe, destiné à être couplé à un moyeu d'une roue d'un véhicule ferroviaire, et un carter, destiné à être couplé à une partie fixe dudit véhicule ferroviaire, le carter délimitant intérieurement une chambre dans laquelle sont logés un disque, solidarisé au demi-arbre; et une pluralité de cellules optiques, chaque cellule optique étant solidarisée à une paroi du carter par un moyen de montage, la pluralité de cellules optiques étant propres à coopérer avec le disque pour délivrer une mesure d'une grandeur correspondant à une vitesse de rotation du demi-arbre par rapport au carter.

Des odomètres sont connus, par exemple du document US 5 665 965 A.

Des odomètres du type précité sont connus par exemple par le document US 4 031 441 Aet équipent de nombreux véhicules ferroviaires.

Or, il a été constaté que de tels odomètres optiques présentent un taux de défaillance élevé et une durée de vie bien inférieure à celle estimée en bureau d'études.

L'invention a donc pour but de pallier ce problème, en proposant notamment un odomètre optique amélioré, présentant une fiabilité accrue.

L'invention a ainsi pour objet un odomètre optique selon les revendications annexées.

Il a en effet été constaté que la réduction de la durée de vie des odomètres optiques de l'état de la technique est due au dépôt de poussières sur le capteur optique des cellules optiques de l'odomètre. Sous l'effet des sollicitations extérieures, qui présentent un spectre étendu englobant notamment une fréquence propre de résonance de l'odomètre optique lui-même, une cellule est soumise à des vibrations qui font que la carte électronique portant le capteur optique vient frotter sur le boîtier de la cellule enfermant la carte électronique pour la protéger. Ce frottement est la cause d'une usure du matériau constitutif du boîtier de la cellule et de la création de la poussière se retrouvant sur les capteurs optiques et qui dégrade le bon fonctionnement de ces derniers.

Ainsi, par l'ajout d'un moyen de liaison additionnel permettant de coupler mécaniquement les différentes cellules entre elles, les vibrations préjudiciables sont fortement atténuées et les modes propres de vibration sont repoussés hors du spectre en fréquence des sollicitations au cours de l'utilisation de l'odomètre optique.

L'invention et ses avantages seront mieux compris à la lecture de la description détaillée qui va suivre d'un mode de réalisation particulier donné uniquement à titre d'exemple non limitatif, cette description étant faite en se référant à l'unique dessin annexé représentant une demi-coupe axiale d'un odomètre optique selon l'invention.

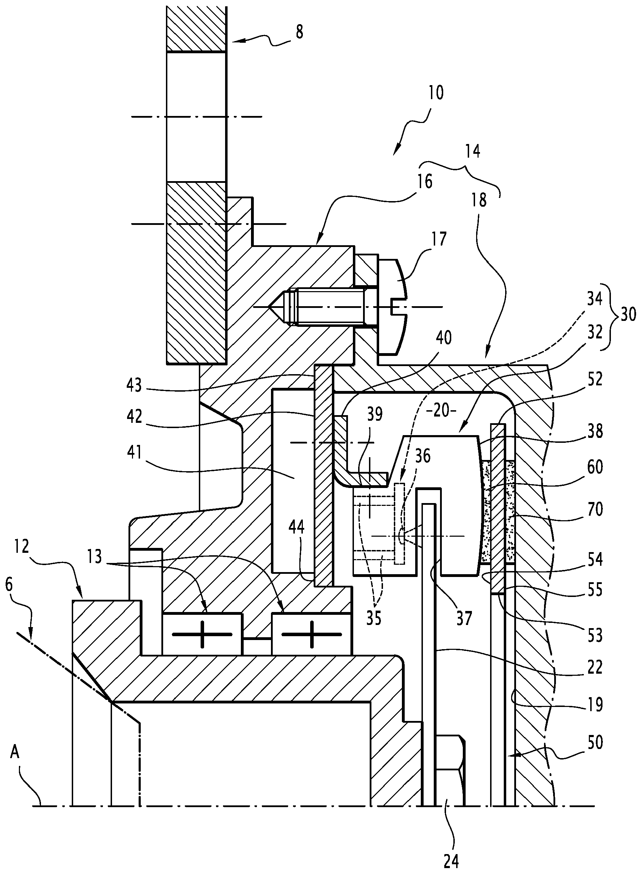

L'odomètre optique 10 de la figure 1 présente une forme sensiblement symétrique par rotation autour d'un axe A.

L'odomètre optique 10 comporte un demi-arbre 12, propre à tourner autour de l'axe A. Le demi-arbre 12 est muni, à l'une de ses extrémités située à l'extérieur de l'odomètre optique 10, des moyens de couplage, qui permettent de coupler le demi-arbre 12 à des moyens de couplage conjugués dont est muni le moyeu 6 d'une roue d'un véhicule ferroviaire sur laquelle l'odomètre optique 10 est monté, pour déterminer notamment la vitesse instantanée de rotation de cette roue.

L'odomètre optique 10 comporte un carter 14, destiné à être solidarisé à une partie fixe 8 du véhicule ferroviaire. Par partie fixe, on entend une partie du véhicule ferroviaire, tel qu'un bogie du véhicule ferroviaire, qui n'est pas solidaire avec le moyeu des roues.

Le carter 14 résulte de l'assemblage d'une base 16 et d'un capot 18, qui est fixé sur la base 16 au moyen d'une pluralité de vis 17 périphériques.

La base 16 et le capot 18 une fois assemblés l'un sur l'autre délimitent à l'intérieur du carter 14 une chambre 20.

L'extrémité du demi-arbre, opposée à l'extrémité extérieure qui est connectée au moyeu 6 de la roue, est logée à l'intérieur de la chambre 20.

Le demi-arbre 12 traverse donc axialement la base 16. Pour permettre un mouvement de rotation relatif entre le demi-arbre 12 et la base 16, des paliers 13 sont prévus à l'interface entre le demi-arbre 12 et la base 16.

Le capot 18 est donc monté par approche axiale sur la base 16 de manière à venir recouvrir l'extrémité intérieure du demi-arbre 12.

Un disque 22 est solidarisé à l'extrémité intérieure du demi-arbre 12, par exemple au moyen d'un boulon 24. Le disque 22 est ainsi solidaire en rotation du demi-arbre 12 et, par conséquent, du moyeu 6. Le disque 22 repose dans un plan transversal à l'axe A.

La chambre 20 accueille également une pluralité de cellules 30. Par exemple, la pluralité de cellules comporte quatre cellules, trois cellules de mesure et une cellule de redondance, qui sont disposées au voisinage du pourtour du disque 22, et distribuées angulairement de manière uniforme.

Chaque cellule optique 30 comporte un boîtier 32, par exemple en matière plastique, qui présente une forme sensiblement parallélépipédique.

Le boîtier 32 renferme un circuit électronique 34 portant entre autres composants électroniques un capteur optique 36.

Le circuit électronique 34 est supporté sur une surface intérieure du boîtier 32 par des entretoises 35.

Le boîtier 32 comporte une encoche 37 permettant de recevoir le pourtour du disque 22. Le capteur optique 36, placé sur le côté de cette encoche 37, est propre à détecter des marques caractéristiques prévues sur une face du disque 22 et qui défilent devant le capteur optique 36.

Les signaux générés par chacun des capteurs optiques 36 des cellules 30 de la pluralité de cellules permettent de déterminer une grandeur correspondant à la vitesse de rotation du moyeu 6.

Une cellule 30 est montée sur la base 16.

Plus précisément, une cellule 30 est montée, au moyen d'une équerre 40 fixée sur une face axiale 39 du boîtier 32 située radialement à l'extérieure, sur une plaque de montage 42. La plaque de montage 42 est annulaire. Elle est propre à être reçue dans un évidement 41 de forme adaptée, prévue dans la base 16. L'évidement 41 comporte deux épaulements, 43 et 44, de réception de la plaque de montage 42. Lors de l'assemblage du capot 18 sur la base 16, la plaque de montage 42 est maintenue en position, solidaire du carter 14.

Pour atténuer la réponse des différentes cellules 30 aux vibrations rencontrées au cours de l'utilisation de l'odomètre sur un véhicule ferroviaire, l'odomètre optique 10 comporte un moyen de liaison additionnel permettant de coupler mécaniquement les cellules 30 entre elles.

Le moyen de liaison est constitué, dans le mode de réalisation présenté ici en détail, par une plaque 50, de préférence métallique. De cette manière, on augmente la rigidité de l'ensemble mécanique constitué par la pluralité de capteurs 30 et on modifie les modes propres de vibration de cet ensemble de manière à ce qu'ils soient repoussés, autant que possible, hors de la plage en fréquence des sollicitations rencontrées.

Chaque cellule 30 est fixée par une face radiale 38 de son boîtier 32 sur une première face transversale 54 de la plaque 50.

Le moyen de couplage utilisé est, dans le mode de réalisation particulier présenté ici en détail, constitué par un adhésif double face 60. Celui-ci est composé d'un sandwich comportant une première couche d'un matériau adhésif, en contact de la face radiale 38 de la cellule 30, une couche intermédiaire en mousse, par exemple plastique, et une seconde couche d'un matériau adhésif, en contact de la première face transversale 54 de la plaque 50.

Les modes propres de vibration de l'ensemble des cellules 30 fixées sur la plaque 50 sont contrôlés par la masse et la forme de la plaque 50, celles-ci étant déterminées lors de la conception de l'odomètre, par exemple au moyen de simulations numériques.

Dans le présent mode de réalisation, la plaque 50 possède ainsi un contour 52, radialement à l'extérieur, qui est circulaire et un contour 53, radialement à l'intérieur, qui est également circulaire et délimite un évidement central.

En variante, la plaque est par exemple conformée en étoile, chaque branche de l'étoile étant couplée à une cellule 30. Eventuellement, le centre de l'étoile comporte également un évidement.

Avantageusement, la seconde face transversale 55 de la plaque 50, opposée à la première face transversale 54, est elle-même fixée sur une surface intérieure d'une paroi 19 du capot 18. La surface intérieure est disposée transversalement, au moins en regard des zones de fixation avec la plaque 50.

Dans le mode de réalisation présenté ici en détail, un second adhésif 70, identique au premier adhésif 60, est utilisé pour fixer la plaque 50 sur la paroi 19 capot 18.

En fixant la plaque 50 au capot 14, on solidarise mieux l'ensemble constitué de la pluralité de cellules 30 et de la plaque 50 au carter 14 et l'on réduit encore davantage la réponse des cellules 30 aux sollicitations extérieures.

Le matériau utilisé pour réaliser l'interface entre la plaque 50 et, d'une part, les cellules 30 et, d'autre part, le capot 18 est avantageusement une mousse, de manière à absorber l'énergie des vibrations non souhaitées.

De plus une mousse présente un certain degré de compressibilité qui est mis à profit lors du montage de l'odomètre optique 10.

Pour cela, la chaîne de cotes entre la paroi radiale 38 des cellules 30 en regard de la paroi 19 du capot 18 et la paroi 19 du capot 18 est inférieure à l'épaisseur cumulée du premier adhésif 60, de la plaque 50, et du second adhésif 70.

Alors, lors du montage de l'odomètre optique 10 et de la fermeture du capot 18 au moyen des vis 17, la mousse des adhésifs 60 et 70 est légèrement compressée. En conséquence, une légère contrainte mécanique orientée axialement est appliquée sur les cellules 30. Cela favorise encore le maintien en position des cellules 30 pour éviter les vibrations néfastes, qui sont davantage absorbées dans la mousse les adhésifs 60 et 70.

L'homme du métier constatera que l'ajout d'une plaque à l'intérieur du carter d'un odomètre est une opération facile à réaliser et qui permet donc d'améliorer la durée de vie des odomètres optiques existants au cours d'une simple phase de maintenance de celui-ci.

La solution proposée est particulièrement simple à mettre en oeuvre notamment parce que les cellules optiques 30 sont souvent des composants pris sur étagère (ou composants COTS pour « commercial on the shelf »), qu'il n'est pas possible d'ouvrir et de modifier.

## Revendications

1. Odomètre optique (10) du type présentant une forme globalement symétrique par rotation autour d'un axe (A), comportant un demi-arbre (12) mobile en rotation autour dudit axe, destiné à être couplé à un moyeu d'une roue d'un véhicule ferroviaire, et un carter (14), destiné à être couplé à une partie fixe dudit véhicule ferroviaire, le carter délimitant intérieurement une chambre (20) dans laquelle sont logés un disque (22), solidarisé au demi-arbre; et une pluralité de cellules optiques (30), chaque cellule optique étant solidarisée à une paroi du carter par un moyen de montage (40), la pluralité de cellules optiques étant propres à coopérer avec le disque pour délivrer une mesure d'une grandeur correspondant à une vitesse de rotation du demi-arbre par rapport au carter, les cellules de la pluralité de cellules (30) étant, en outre, couplées mécaniquement entre elles par un moyen de liaison additionnel (50), le moyen de liaison additionnel comportant une plaque (50) disposée transversalement à l'axe (A), les cellules étant fixées sur une première face (54) de la plaque, une seconde face (55) de la plaque (50), opposée à la première face (54), étant fixée à une paroi (19) du carter (14), **caractérisé en ce que** la paroi (19) du carter (14) sur laquelle est fixée la plaque (50) est une paroi sensiblement transversale à l'axe, la plaque (50) étant fixée à ladite paroi (19) par un premier adhésif (70).

2. Odomètre optique (10) selon la revendication 1, dans lequel la plaque (50) est métallique.

3. Odomètre optique (10) selon la revendication 2, dans lequel la plaque (50) présente un contour extérieur (52) circulaire.

4. Odomètre optique (10) selon la revendication 1 ou la revendication 2, dans lequel la plaque (50) présente un contour intérieur (52) délimitant un évidement central.

5. Odomètre optique (10) selon l'une quelconque des revendications 1 à 4, dans lequel chaque cellule optique (30) est fixée sur la plaque (50) par l'intermédiaire d'un second adhésif (60).

6. Odomètre optique selon la revendication 5, dans lequel ledit second adhésif (60) est un adhésif double face, dont une couche intermédiaire est constituée d'une mousse.

7. Odomètre optique (10) selon l'une quelconque des revendications 1 à 6, dans lequel une chaîne de cotes entre une paroi d'une cellule (30) en regard de la paroi (19) du carter (14) sur laquelle est fixée la plaque (50) et ladite paroi (19) du carter (14) est inférieure à l'épaisseur cumulée du second adhésif de fixation de la cellule sur la plaque, de la plaque, et du premier adhésif de fixation de la plaque sur ladite paroi (19) du carter (14).

8. Odomètre optique (10) selon l'une quelconque des revendications 1 à 7, dans lequel le carter comporte une base (16) et un capot (18), la base étant destinée à être solidarisée au véhicule ferroviaire, et le capot monté axialement sur la base, le capot et la base délimitant entre eux ladite chambre (20).

## Patentansprüche

1. Optische Wegstreckenmessvorrichtung (10) mit einer durch Drehung um eine Achse (A) im Wesentlichen symmetrische Form, die eine um die Achse drehbewegliche Halbwelle (12), die vorgesehen ist, an die Nabe eines Rades eines Schienenfahrzeuges gekoppelt zu werden, und ein Gehäuse (14), das vorgesehen ist, mit einem feststehenden Teil des Schienenfahrzeugs gekoppelt zu werden, aufweist, wobei das Gehäuse innen eine Kammer (20) begrenzt, in der eine mit der Halbwelle verbundene Scheibe (22) und eine Mehrzahl von optischen Zellen (30) aufgenommen sind, wobei jede optische Zelle mit einer Wand des Gehäuses durch ein Befestigungsmittel (40) verbunden ist, die Mehrzahl von optischen Zellen geeignet sind, mit der Scheibe zusammenzuarbeiten, um eine Messung einer der Drehgeschwindigkeit der Halbwelle in Bezug auf das Gehäuse entsprechenden Größe zu liefern, und die Zellen der Mehrzahl von Zellen (30) außerdem mechanisch untereinander durch ein zusätzliches Verbindungsmittel (50) gekoppelt sind, wobei das zusätzliche Verbindungmittel eine Platte (50) aufweist, die quer zur Achse (A) angeordnet ist, und die Zellen an einer ersten Fläche (54) der Platte befestigt sind und eine zweite Fläche (55) der Platte (50), entgegengesetzt zur ersten Fläche (54), an einer Wand (19) des Gehäuses (14) befestigt ist,
**dadurch gekennzeichnet, dass** die Wand (19) des Gehäuses (14), an der Platte (50) befestigt ist, eine im Wesentlichen quer zur Achse liegende Wand ist, wobei die Platte (50) an der Wand (19) durch ein erstes Klebemittel (70) befestigt ist.

2. Optische Wegstreckenmessvorrichtung (10) nach Anspruch 1, bei der die Platte (50) aus Metall besteht.

3. Optische Wegstreckenmessvorrichtung (10) nach Anspruch 2, bei der die Platte (50) eine kreisförmige Außenkontur (52) aufweist.

4. Optische Wegstreckenmessvorrichtung (10) nach Anspruch 1 oder Anspruch 2, bei der die Platte (50) eine Innenkontur (52) aufweist, die eine mittlere Ausnehmung begrenzt.

5. Optische Wegstreckenmessvorrichtung (10) nach einem beliebigen der Ansprüche 1-4, bei der jede optische Zelle (30) an der Platte (50) mittels eines zweiten Klebemittels (60) befestigt ist.

6. Optische Wegstreckenmessvorrichtung nach Anspruch 5, bei der das zweite Klebemittel (60) ein doppelseitiges Klebemittel ist, dessen Zwischenschicht aus einem Schaum besteht.

7. Optische Wegstreckenmessvorrichtung (10) nach einem beliebigen der Ansprüche 1-6, bei der eine Maßkette zwischen einer Wand eine Zelle (30) gegenüber der Wand (19) des Gehäuses (14), an der die Platte (50) befestigt ist, und der Wand (19) des Gehäuses (14) kleiner ist als die kumulierte Dicke des zweiten Klebemittels zur Befestigung der Zelle an der Platte, der Platte und des zweiten Klebemittels zur Befestigung der Platte an der Wand (19) des Gehäuses (14).

8. Optische Wegstreckenmessvorrichtung (10) nach einem beliebigen der Ansprüche 1-7, bei der das Gehäuse ein Grundteil (16) und eine Kappe (18) aufweist, wobei das Grundteil vorgesehen ist, mit dem Schienenfahrzeug verbunden zu werden und die Kappe axial an dem Grundteil befestigt ist, wobei die Kappe und das Grundteil zwischen sich die Kammer (20) begrenzen.

## Claims

1. Optical odometer (10) of the type having a shape which is generally rotationally symmetrical about an axis (A), having a half-shaft (12) which is rotatable about said axis and is to be coupled to a hub of a wheel of a railway vehicle, and a housing (14) which is to be coupled to a fixed part of said railway vehicle, the housing delimiting internally a chamber (20) in which there are housed a disc (22), attached to the half-shaft, and a plurality of optical cells (30), each optical cell being attached to a wall of the housing by a mounting means (40), the plurality of optical cells being capable of cooperating with the disc in order to deliver a measurement of a value corresponding to a speed of rotation of the half-shaft relative to the housing, the cells of the plurality of cells (30) further being mechanically coupled together by an additional connecting means (50), the additional connecting means having a plate (50) arranged transversely to the axis (A), the cells being fixed to a first face (54) of the plate, a second face (55) of the plate (50), opposite the first face (54), being fixed to a wall (19) of the housing (14), **characterised in that** the wall (19) of the housing (14) to which the plate (50) is fixed is a wall that is substantially transverse to the axis, the plate (50) being fixed to said wall (19) by a first adhesive (70).

2. Optical odometer (10) according to claim 1, wherein the plate (50) is metallic.

3. Optical odometer (10) according to claim 2, wherein the plate (50) has a circular outer contour (52).

4. Optical odometer (10) according to claim 1 or claim 2, wherein the plate (50) has an inner contour (50) which delimits a central recess.

5. Optical odometer (10) according to any one of claims 1 to 4, wherein each optical cell (30) is fixed to the plate (50) by way of a second adhesive (60).

6. Optical odometer according to claim 5, wherein said second adhesive (60) is a double-sided adhesive, an intermediate layer of which is constituted by a foam.

7. Optical odometer (10) according to any one of claims 1 to 6, wherein a chain of dimensions between a wall of a cell (30) facing the wall (19) of the housing (14) to which the plate (50) is fixed and said wall (19) of the housing (14) is less than the cumulative thickness of the second adhesive for fixing the cell to the plate, the plate, and the first adhesive for fixing the plate to said wall (19) of the housing (14).

8. Optical odometer (10) according to any one of claims 1 to 7, wherein the housing has a base (16) and a cover (18), the base being intended to be attached to the railway vehicle and the cover being mounted axially on the base, the cover and the base delimiting between them said chamber (20).
